# EUROPÄISCHE PATENTSCHRIFT

(11) **EP 1 995 105 B1**
(45) Veröffentlichungstag und Bekanntmachung des Hinweises auf die Patenterteilung: **24.02.2010**
(21) Anmeldenummer: 08162991.7
(22) Anmeldetag: 31.05.2003
(51) Int. Cl.: B60K 17/04, B60K 17/16

(54) **Fahrzeugachse**
Vehicle axle
Essieu de véhicule

(30) Priorität: 17.06.2002 DE 10227027
(43) Veröffentlichungstag der Anmeldung: 26.11.2008
(62) Teilanmeldung aus: 03012472.1
(73) Patentinhaber: CLAAS Industrietechnik GmbH, 33106 Paderborn (DE)
(72) Erfinder: Engenhorst, Werner, 33428, Harsewinkel (DE); Loeneke, Markus, 33142, Büren (DE); Verhorst, Jan-Willem, 33142, Büren (DE)

(56) Entgegenhaltungen:
- EP-A1- 0 076 465
- DE-A1- 2 216 677
- US-A- 3 403 746

## Beschreibung

Die Erfindung bezieht sich auf eine Fahrzeugachse unter anderem für selbstfahrende Erntemaschinen wie etwa Mähdrescher, nach dem Oberbegriff des Patentanspruches 1.
Bei den bekannten ungelenkten Antriebsachsen für Erntemaschinen (EP 698 338 B1 und DE-PS 15 55 953) wird die Antriebsleistung über ein Hauptgetriebe an die Radgetriebe übertragen. Das Hauptgetriebe ist vorwiegend im mittleren Bereich des Achsrohrs an diesem angeflanscht oder In seiner Gesamtheit als tragendes Bauteil in die Antriebsachse integriert. Die beidseitig vom Hauptgetriebe ausgehenden Antriebswellen verlaufen entweder parallel zum Achsrohr oder koaxial innerhalb von diesem bis zu den seitlichen Radgetrieben. Diese sind an beiden Endbereichen des Achsrohrs in unmittelbarer Nähe der Laufräder angeordnet und werden dabei von den Felgen und den Reifen überdeckt. Die Verbindung der Antriebsachse mit dem Maschinenrahmen erfolgt an zwei Befestigungsstellen über Stützkonsolen, die in einem seitlichen Abstand neben den Radgetrieben angeordnet sind. Infolge dieser von den Radgerieben entfernten Befestigung erfolgt eine ungünstige Einleitung der abzustützenden Last, sodass hohe Biegemomente auf die Radgetriebe einwirken. Aufgrund dieser Belastungen ist ein erheblicher Stabllisierungsaufwand für die Radgetriebe erforderlich. Dadurch ist eine weitaus größere Dimensionierung der Bauteile notwendig, als es für die reine Drehmomentübertragung notwendig ist.
Insbesondere betrifft dies die Lagerabmessungen und Wellendurchmesser, wodurch sich der Herstellungsaufwand entsprechend erhöht.

Aus der EP 0 078 465 A1 ist eine Fahrzeugachse gemäß dem Oberbegriff des Anspruches 1 bekannt. Die EP 0 076 465 A1 beschreibt eine Fahrzeugachse mit einem Verteilgetriebe, welches zumindest zwei voneinander getrennte Gehäuse aufweist wobei nur ein Gehäuse als tragendes Bauteil ausgeführt ist.

Der Erfindung liegt die Aufgabe zugrunde, eine kompakte Bauweise der Fahrachse zu erreichen.
Erfingdungsgemäß wird diese Aufgabe durch die In Patentanspruch 1 genannten Merkmale gelöst. Weitere vorteilhafte Ausführungen des Erfindungsgegenstandes ergeben sich aus den nachgeordneten Ansprüchen.
Die kompakte Bauweise der Antriebsachse mit den zugehörigen Getrieben ermöglicht eine beanspruchungsgerechte, stabile und zugleich kostengünstige Ausführung.

Die Erfindung wird nachstehend an einem Ausführungsbeispiel näher erläutert. In der zugehörigen Zeichnung zeigen
- Flg. 1: eine Seitenansicht des vorderen Bereiches eines Mähdreschers,

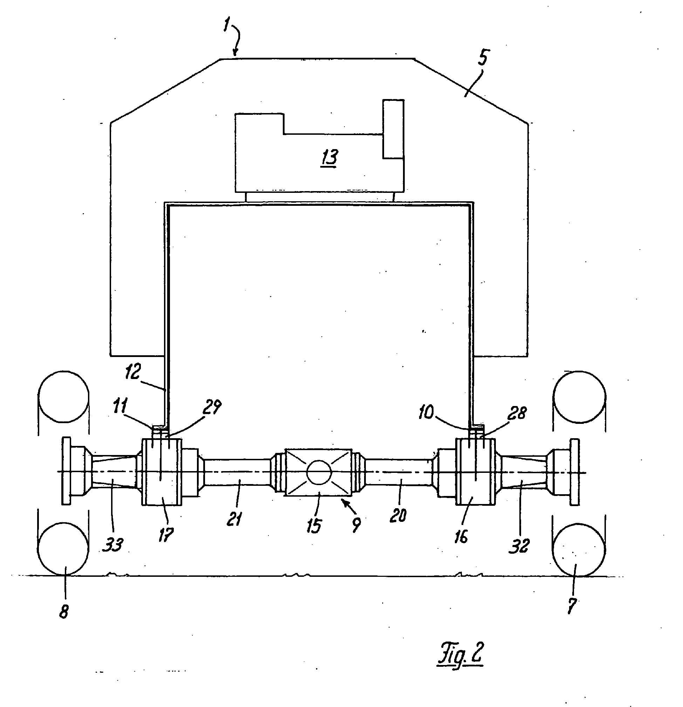

- Fig. 2: die Vorderansicht der Antriebsachse mit den Verbindungsstellen zum Maschinenrahmen,

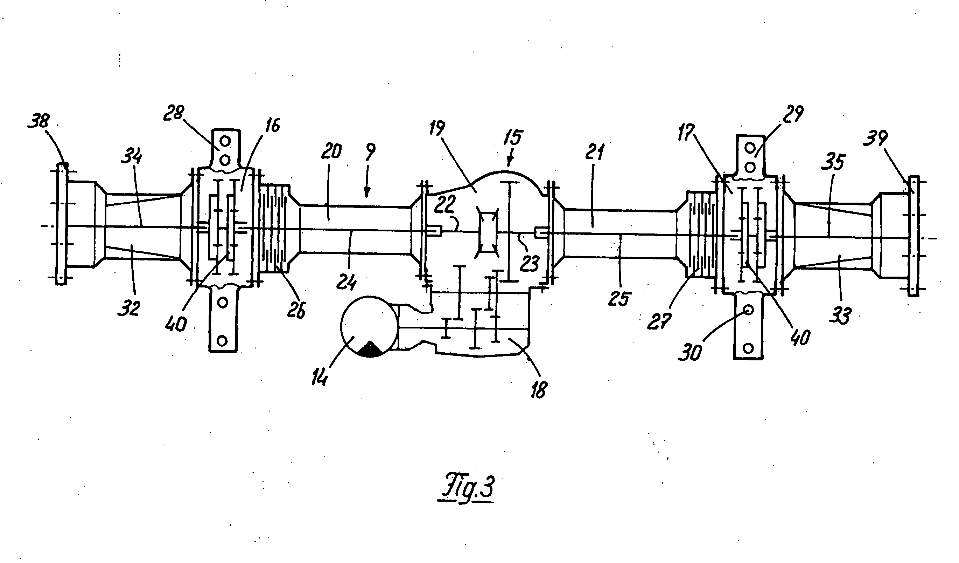

- Fig. 3: die Draufsicht auf die Antriebsachse in einer tellwelsen Schnittdarsfellung,

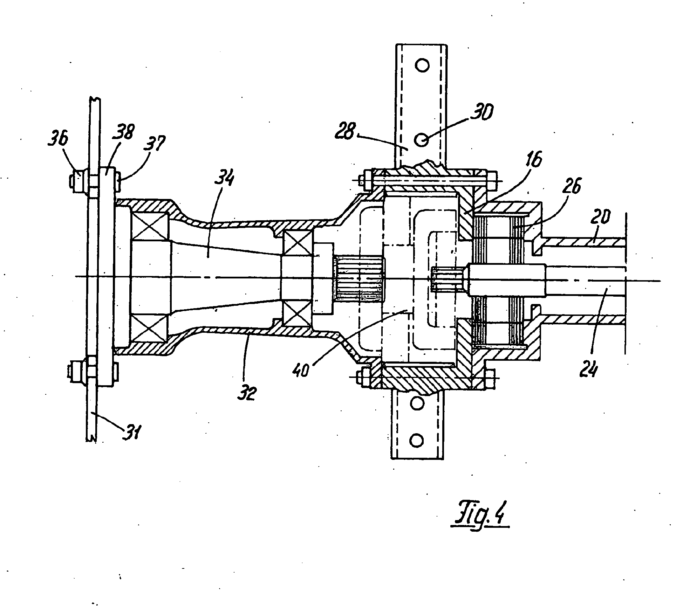

- Fig. 4: den seitlichen Achsbereich mit Radgetriebe und Tragzapfen in einer Schnittdarstellung,

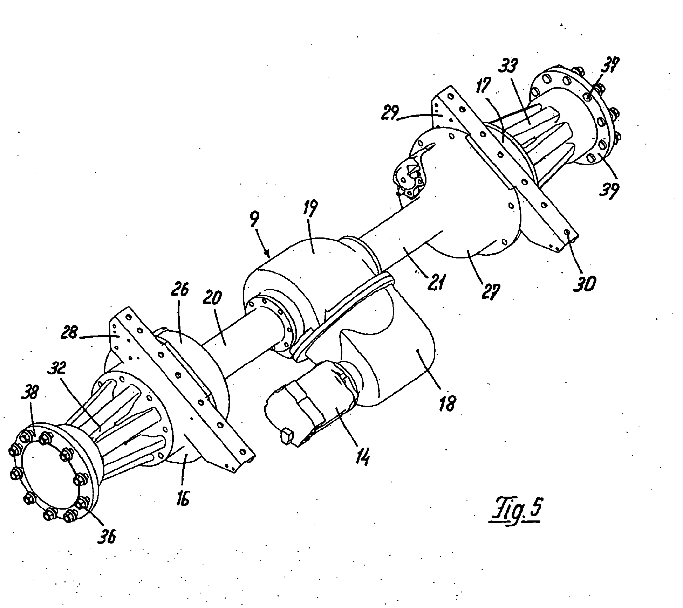

- Fig. 5: eine perspektivische Darstellung der Antriebsachse.

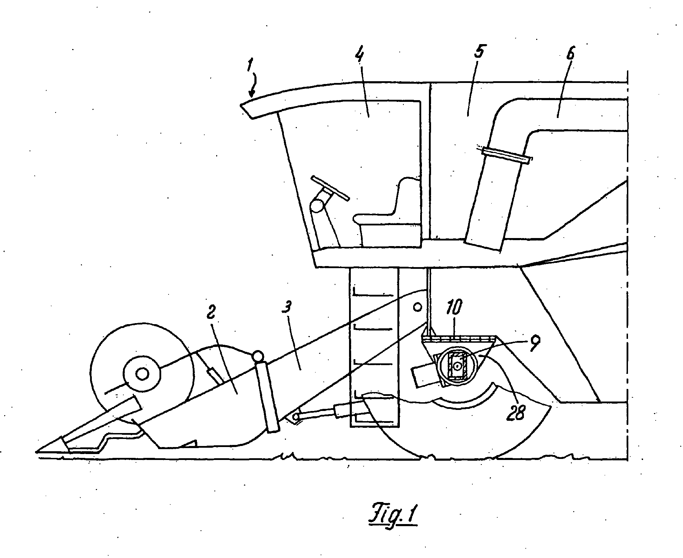

Der in Fig. 1 teilweise dargestellte vordere Bereich eines selbstfahrenden Mähdreschers 1 weist ein Schneidwerk 2, einen Einzugskanal 3, eine Fahrerkabine 4 und einen Korntank 5 mit Entleerungsschnecke 6 auf. Die vorderen, angetriebenen und nicht lenkbaren Laufräder 7,8 sind an der Antriebsachse 9 befestigt. An den Verbindungsstellen 10,11 Ist die Antriebsachse 9 mittels Schrauben mit dem Maschinenrahmen 12 verbunden. Am Maschinenrahmen 12 sind weiterhin unter anderem in an sich bekannter und deshalb nicht dargestellter Weise die Dresch- und Reinigungseinrichtung, die Strohschüttler, Antriebs- und Fördereinrichtungen sowie der Antriebsmotor 13 des Mähdreschers 1 angeordnet. Der Antrieb der Laufräder 7,8 erfolgt von einem Hydromotor 14 aus über ein Verteilgetriebe 15 und die Radgetriebe 16,17 zu den Laufrädern 7,8. Das Verteilgetriebe 15 ist etwa in der Mitte der Antriebsachse 9 zwischen den Laufrädern 7,8 angeordnet. Es besteht im Einzelnen aus dem Schaltgetriebe 18 mit angeflanschtem Hydromotor 14 und aus dem Differentialgetriebe 19, die in zwei voneinander getrennten Gehäusen angeordnet sind. Beide Gehäuse sind schraubbar miteinander verbunden. Während das Gehäuse des Differentialgetriebes 19 als tragendes Bauteil ausgebildet ist, hat das Gehäuse des Schaltgetriebes 18 keine tragende Funktion zu erfüllen und kann somit in seinen Abmessungen entsprechend geringer dimensioniert werden. Das Schaltgetriebe 18 und das Differentialgetriebe 19 weisen einen gemeinsamen oder jeweils einen separaten Ölkreislauf auf. An beiden Seiten des Differentialgetriebes 19 sind tragende Achsrohre 20,21 mittels einer Schraubverbindung befestigt. Die Ausgangswellen 22, 23 des Differentialgetriebes 19 sind über eine lösbare Steckverbindung mit Antriebswellen 24,25 verbunden, die innerhalb der Achsrohre 20,21 verlaufen. Die Achsrohre 20,21 sind mit integrierten Bremseinrichtungen 26,27 vorzugsweise mit Lamellenbremsen, versehen. Am bremsseitigen Ende sind die Achsrohre 20,21 mit den Radgetrieben 16,17 ebenfalls durch Schrauben lösbar verbunden. Die Radgetriebe 16,17 sind insbesondere als doppelstufige Planetengetriebe ausgebildet und dienen der Reduzierung der Antriebsdrehzahl für die Laufräder 7,8. Im oberen Bereich der Radgetriebe 16,17 sind Tragkonsolen 28,29 mit Bohrungen 30 und einer zum Maschinenrahmen 12 gerichteten Auflagefläche angeordnet. Durch eine Schraubverbindung erfolgt an den Verbindungsstellen 10,11 der Anschluss der Antriebsachse 9 an den Maschinenrahmen 12. Zwischen den Radgetrieben 16,17 und den Felgen 31 der Laufräder 7,8 sind Tragzapfen 32,33 abgeordnet, die die tragende Verbindung zwischen diesen Bauteilen herstellen. Die Tragzapfen 32,33 sind über eine Schraubverbindung lösbar mit den Radgetrieben 16,17 verbunden. Während die Radgetriebe 16,17 eine einheitliche Ausführung aufweisen, können die Tragzapfen 32,33 in Abhängigkeit von der Größe und der Anzahl der zu adaptierenden Laufräder 7, 8 in ihren Abmessungen unterschiedlich ausgeführt sein. Dadurch ist eine Anpassung der Antriebsachsen 9 an verschiedene Belastungen und Einsatzzwecke auf eine einfache Weise möglich. Die Antriebsverbindung zwischen den Radgetrieben 16,17 und den Felgen 31 erfolgt durch Wellen 34,35, die innerhalb der Tragzapfen 32,33 verlaufen. Über Radmuttern 36 sind die Felgen 31 an den Bolzen 37 der Radflansche 38,39 befestigt. Da der Maschinenrahmen 12 unmittelbar über die Tragkonsolen 28,29 der Radgetriebe 16,17 mit der Antriebsachse 9 verbunden ist, werden die Funktionen der Drehmomentübertragung und der Lastaufnahme voneinander getrennt und von separaten Baugruppen übertragen, die nur auf die jeweils wirkende Belastung ausgelegt sind. Über die Antriebselemente 40 der Radgetriebe 16, 17 werden keine Biegelasten, sondern nur die wirkenden Drehmomente übertragen. Die Biegelasten der Tragzapfen 32,33 werden im Wesentlichen unter Umgehung der Antriebselemente 40 der Radgetriebe 16,17 in den Maschinenrahmen 12 eingeleitet. Durch die entfallende Einwirkung der Biegemomente können die Radgetriebe 16,17 unter Festigkeitsgesichtspunkten geringer dimensioniert werden, so dass die Herstellungskosten erheblich reduzierbar sind.

### Bezugszeichenliste

| | | | |
|---|---|---|---|
| 1 | Mähdrescher | 31 | Felgen |
| 2 | Schneidwerk | 32 | Tragzapfen |
| 3 | Einzugskanal | 33 | Tragzapfen |
| 4 | Fahrerkabine | 34 | Welle |
| 5 | Korntank | 35 | Welle |
| 6 | Entleerungsschnecke | 36 | Radmutter |
| 7 | Laufrad | 37 | Bolzen |
| 8 | Laufrad | 38 | Radflansch |
| 9 | Antriebsachse | 39 | Radflansch |
| 10 | Verbindungsstelle | 40 | Antriebselemente |
| 11 | Verbindungsstelle | | |
| 12 | Maschinenrahmen | | |
| 13 | Antriebsmotor | | |
| 14 | Hydromotor | | |
| 15 | Verteilgetriebe | | |
| 16 | Radgetriebe | | |
| 17 | Radgetriebe | | |
| 18 | Schaltgetriebe | | |
| 19 | Differentialgetriebe | | |
| 20 | Achsrohr | | |
| 21 | Achsrohr | | |
| 22 | Ausgangswelle | | |
| 23 | Ausgangswelle | | |
| 24 | Antriebswelle | | |
| 25 | Antriebswelle | | |
| 26 | Bremseinrichtung | | |
| 27 | Bremseinrichtung | | |
| 28 | Tragkonsole | | |
| 29 | Tragkonsole | | |
| 30 | Bohrungen | | |

## Patentansprüche

1. Fahrzeugachse mit zumindest einem Verteilgetriebe und wenigstens einem mit diesem Verteilgetriebe antriebsverbundenem radseitigen Getriebe, wobei das wenigstens eine radseitige Getriebe einenends mit dem Rahmen des die Fahrzeugachse aufnehmenden Trägerfahrzeugs und anderenends mit dem Tragzapfen zumindest eines Laufrades in Wirkverbindung steht und einen Teil des Antriebsstranges des wenigstens einen Laufrades bildet, wobei das Verteilgetriebe (15) zumindest zwei voneinander getrennte Gehäuse aufweist, in dessen einem Gehäuse das Schaltgetriebe (18) und in dem anderen Gehäuse das Differentialgetriebe (19) angeordnet ist, wobei nur das Gehäuse des Differentialgetriebes (19) als tragendes Bauteil ausgebildet ist, wobei an beiden Seiten des Gehäuses Achsrohre (20, 21) angeordnet sind,
**dadurch gekennzeichnet,**
**dass**, die Achsrohre (20,21) mit integrierten Bremseinrichtungen (26,27) versehen sind.

2. Fahrzeugachse nach Anspruch 1,
**dadurch gekennzeichnet,**
**dass** das Gehäuse für das Schaltgetriebe (18) lösbar mit dem tragenden Gehäuse für das Differentialgetriebe (19) verbunden ist.

3. Fahrzeugachse nach einem der Ansprüche 1 oder 2,
**dadurch gekennzeichnet,**
**dass** die an beiden Seiten des Gehäuses für das Differentialgetriebe (19) angeordneten Achsrohre (20,21) lösbar befestigt sind.

4. Fahrzeugachse nach einem der Ansprüche 1 bis 3,
**dadurch gekennzeichnet,**
**dass** die Achsrohre (20,21) am bremsseitigen Ende mit den Radgetrieben (18,17) lösbar verbunden sind.

5. Fahrzeugachse nach Anspruch 1,
**dadurch gekennzeichnet,**
**dass** das Schaltgetriebe (18) und das Differentialgetriebe (19) einen gemeinsamen oder jeweils einen separaten Ölkreislauf aufweisen,

## Claims

1. A vehicle axle comprising at least one transfer gearbox and at least one wheel-side transmission drivingly connected to said transfer gearbox, wherein the at least one wheel-side transmission is operatively connected on the one hand to the frame of the carrier vehicle mounting the vehicle axle and on the other hand to the support trunnion of at least one wheel and forms a part of the drive train of the at least one wheel, wherein the transfer gearbox (15) has at least two mutually separated housings, in one housing of which the shift transmission (18) is arranged and in the other housing the differential transmission (19) is arranged, wherein only the housing of the differential transmission (19) is in the form of a load-bearing component, wherein axle tubes (20, 21) are arranged at both sides of the housing,
**characterised in that**
the axle tubes (20, 21) are provided with integrated braking devices (26, 27).

2. A vehicle axle according to claim 1 **characterised in that** the housing for the shift transmission (18) is releasably connected to the load-bearing housing for the differential transmission (19).

3. A vehicle axle according to one of claims 1 and 2 **characterised in that** the axle tubes (20, 21) arranged at both sides of the housing for the differential transmission (19) are releasably fixed.

4. A vehicle axle according to one of claims 1 to 3 **characterised in that** the axle tubes (20, 21) are releasably connected at the brake end to the wheel transmissions (16, 17).

5. A vehicle axle according to claim 1 **characterised in that** the shift transmission (18) and the differential transmission (19) have a common or a respective separate oil circuit.

## Revendications

1. Essieu de véhicule comprenant au moins une boîte de transfert et au moins une transmission côté roue reliée par entraînement à cette boîte de transfert, dans lequel l'au moins une transmission côté roue est en relation active à une extrémité avec le châssis du véhicule porteur recevant l'essieu de véhicule et à l'autre extrémité avec le cône porteur d'au moins une roue porteuse et forme une partie de la chaîne cinématique de l'au moins une roue porteuse, dans lequel la boîte de transfert (15) présente au moins deux carters séparés l'un de l'autre, dans un desquels carters est agencé la boîte de vitesses (18) et dans l'autre carter, le différentiel (19), dans lequel seul le carter du différentiel (19) est réalisé sous forme d'élément porteur, dans lequel des tubes d'essieu (20, 21) sont agencés des deux côtés du carter,
**caractérisé en ce que**
les tubes d'essieu (20, 21) sont pourvus d'équipements de freinage (26, 27) intégrés.

2. Essieu de véhicule selon la revendication 1,
**caractérisé en ce que**
le carter destiné à la boîte de vitesses (18) est relié de manière amovible au carter porteur destiné au différentiel (19).

3. Essieu de véhicule selon l'une quelconque des revendications 1 ou 2,
**caractérisé en ce que**
les tubes d'essieu (20, 21) agencés des deux côtés du carter destiné au différentiel (19) sont fixés de manière amovible.

4. Essieu de véhicule selon l'une quelconque des revendications 1 à 3,
**caractérisé en ce que**
les tubes d'essieu (20, 21) sont reliés de manière amovible à l'extrémité côté frein avec les transmissions de roue (16, 17).

5. Essieu de véhicule selon la revendication 1,
**caractérisé en ce que**
la boîte de vitesses (18) et le différentiel (19) présentent un circuit d'huile commun ou respectivement un circuit d'huile séparé.
